# EUROPÄISCHE PATENTANMELDUNG

(11) **EP 4 374 745 A1**
(43) Veröffentlichungstag der Anmeldung: **29.05.2024**
(21) Anmeldenummer: 23207094.6
(22) Anmeldetag: 31.10.2023
(51) Int. Cl.: A47J 27/04, A47J 36/08, A47J 36/38

(54) **KÜCHENGERÄT**

(30) Priorität: 22.11.2022 BE 202205943
(71) Anmelder: Miele & Cie. KG, 33332 Gütersloh (DE)
(72) Erfinder: Diestelhorst, Tim Otis, 32257 Bünde (DE); Metz, Thomas, 32257 Bünde (DE); Lenzen, Ulrike, 32052 Herford (DE); Brinkmann, René-Pascal, 33689 Bielefeld (DE); Biemelt, Michael, 33397 Rietberg (DE); Peters, Andre, 32051 Herford (DE); Busse, Christian, 32289 Rödinghausen (DE); Hinrichs, Stefan, 32469 Petershagen (DE); Bergmeier, Tino, 32278 Kirchlengern (DE)

(57) **Zusammenfassung**

Die Erfindung betrifft ein Küchengerät (1), vorzugsweise ein Küchengerät (1) mit Dampffunktion, besonders vorzugsweise eine Dampfgarschublade (1), mit einem Innenraum (12), vorzugsweise einem Garraum (12), welcher ausgebildet ist, wenigstens ein Gargeschirr und/oder wenigstens ein Lebensmittel durch eine Zugangsöffnung (13) von oben aufzunehmen, und mit einem Deckel (14), welcher ausgebildet ist, durch Schwenken mittels eines Schwenkelements (15), vorzugsweise eines Scharniers (15), die Zugangsöffnung (13) des Innenraums (12) von oben zu verschließen und freizugeben. Das Küchengerät (1) ist gekennzeichnet durch wenigstens ein Abtropfelement (18), welches ausgebildet und angeordnet ist, an der Unterseite (14a) des hochgeschwenkten Deckels (14) herunterlaufende Flüssigkeit, insbesondere Kondenswasser, aufzufangen und in den Innenraum (12), vorzugweise in einen Abfluss (17), zu leiten, wobei das Abtropfelement (18) zumindest abschnittsweise, vorzugsweise vollflächig, eine Führungsfläche (18b) als Gefälle (18b) aufweist, welche ausgebildet ist, aufgefangene Flüssigkeit, vorzugsweise mittig, in den Innenraum (12), vorzugweise in einen Abfluss (17), zu leiten.

## Beschreibung

Die Erfindung betrifft ein Küchengerät gemäß dem Patentanspruch 1.

Zur Zubereitung von Lebensmitteln, welche auch als zu behandelndes Gut oder als Gargut bezeichnet werden können, sind verschiedene Küchengeräte bekannt, welche auch als Gargeräte bezeichnet werden können. Hierzu gehören die Kochfelder, auf denen das Gargut in einem Gargeschirr wie zum Beispiel in einem Kochtopf, mit oder ohne Deckel, in einer Pfanne und dergleichen durch Kochen, Braten und dergleichen gegart werden kann.

Auch sind Gargeräte bekannt, welche einen unbeweglich, d.h. feststehend, mit dem Gargerät ausgebildeten Garraum aufweisen, in welchen das Gargut in bzw. auf einem Gargeschirr angeordnet und bei geschlossenem Garraum des Gargeräts gegart werden kann. Ein derartiges Gargerät kann zum Beispiel ein Backofen, ein Dampfgarer, eine Mikrowelle, ein Kombinationsgerät aus Backofen mit Dampfgarer und bzw. oder mit Mikrowelle und dergleichen sein. Derartige Gargeräte mit feststehendem Garraum weisen üblicherweise zumindest in Deutschland in der vertikalen Richtung eine Bauhöhe von ca. 45 cm auf, wobei Backöfen auch mit einer Bauhöhe von ca. 60 cm üblich sind.

Derartige Gargeräte mit feststehendem Garraum haben gemeinsam, dass sie ein äußeres Gehäuse als Außengehäuse aufweisen, welches das Gargerät nach außen im Wesentlichen umschließt und dessen einzelnen Bauteile und Elemente schützt sowie gemeinsam handhabbar macht. Innerhalb des Gargerätes wird ein Innenraum ausgebildet, welcher den Garraum darstellt und im Wesentlichen von einem inneren Gehäuse als Innengehäuse, auch als Garraummuffel oder Muffel bezeichnet, umschlossen wird. Zwischen dem Innengehäuse und dem Außengehäuse wird ein Gehäuseraum als Zwischenraum gebildet, in welchem Funktionselemente des Gargeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Gargerätes dienen. In der Tiefe von Vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Gargeräts weist in der Tiefe nach Vorne eine Durchgangsöffnung als Zugangsöffnung auf, durch welche hindurch der Innenraum des Gargeräts für den Benutzer zugänglich ist, um Gargeschirre in den Innenraum des Gargeräts als dessen Garraum einzuführen und dort anzuordnen sowie um Gargeschirre nach erfolgter Behandlung des Garguts aus dem Innenraum des Gargeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Gargeräts zugreifen können, wie zuvor beschrieben, oder um den Innenraum des Gargeräts zu verschließen und den Garvorgang bzw. den Garprozess auszuführen. Ein derartiges Verschlusselement kann geschlossen ausgebildet sein oder ein Sichtfenster aufweisen, um dem Benutzer einen Einblick in den geschlossenen Innenraum des Gargeräts zu ermöglichen.

Derartige Gargeräte mit feststehendem Garraum werden üblicherweise als Einbaugeräte bzw. als Kücheneinbaugeräte ausgebildet, um platzsparend und auf einer für den Benutzer gut zugänglichen Höhe in der vertikalen Richtung in Küchenmöbeln wie zum Beispiel in Einbauschränken einer Küche feststehend mit ihrem Außengehäuse angeordnet zu werden und mit ihrem Verschlusselement, ggfs. zusätzlich mit ihrer Blende, siehe oben, nach Vorne zum Benutzer hin flächig bündig mit den Oberflächen der übrigen Gargeräte, Schubladen, Türen und dergleichen des Küchenmöbels abzuschließen, was den optischen Eindruck für den Benutzer verbessern kann.

Es sind auch andere Kücheneinbaugeräten wie zum Beispiel mit Wärmeschubladen, Vakuummierschubladen und dergleichen bekannt, welche wie zuvor beschrieben in der Küche montiert und insbesondere mit den zuvor beschriebenen Gargeräten als Einbaugeräte kombiniert horizontal übereinander und bzw. oder vertikal nebeneinander angeordnet werden. Wärmeschubladen dienen zum Beispiel dem Warmhalten des gegarten Garguts ohne weitere Garung und dem Vorwärmen von Geschirr. In Vakuummierschubladen können Lebensmitteln im Vakuum in einer Verpackung luftdicht verschlossen werden.

Derartige Schubladen als Küchengeräte sind grundsätzlich vergleichbar den zuvor beschriebenen Gargeräten mit feststehendem Garraum aufgebaut, wobei Schubladen deutlich flacher, d.h. kleiner in der vertikalen Richtung, ausgebildet sind und somit vom Benutzer nach Vorne zu sich hin aus dem Küchenmöbel herausgezogen werden müssen, um in der vertikalen Richtung von oben einen Zugriff auf ihren Innenraum zu ermöglichen. Zu diesem Zweck weist der bewegliche Teil der Schublade, welcher auch als Auszug bezeichnet werden kann, einen Auszugsboden auf, welcher der Aufnahme zum Beispiel des Gargeschirrs in der vertikalen Richtung von oben dient und zum Beispiel über in der Querrichtung seitlich angeordnete Schienen in der Tiefe beweglich gegenüber dem Innengehäuse der Schublade ausgebildet sein kann. Der Auszugsboden weist üblicherweise in der Tiefe nach Vorne hin eine vertikal ausgerichtete Blende auf, welche den Innenraum der Schublade bzw. dessen Zugangsöffnung im geschlossen Zustand verschließt.

Derartige Schubladen, auch Einbauschubladen genannt, weisen üblicherweise zumindest in Deutschland in der vertikalen Richtung eine Bauhöhe von ca. 15 cm auf. Schubladen werden üblicherweise in der vertikalen Richtung unterhalb eines Gargeräts mit feststehendem Garraum wie zum Beispiel unterhalb eines Backofens, unterhalb eines Dampfgarers und dergleichen oder in Kombination mit einer weiteren Schublade in der vertikalen Richtung übereinander angeordnet, können jedoch auch einzeln und eigenständig in einem Küchenmöbel eingebaut werden. Da die Einbauräume für Kücheneinbaugeräte in Küchenmöbel, welche auch als Nischen bezeichnet werden können, üblicherweise zumindest in Deutschland in der vertikalen Richtung eine Höhe von ca. 60 cm aufweisen, können insbesondere eine Schublade mit ca. 15 cm Bauhöhe und ein Gargerät mit feststehendem Garraum mit ca. 45 cm Bauhöhe modular miteinander kombiniert als Einbaugeräte verwendet werden.

Es ist auch bekannt, Gargeräte mit Dampfgarfunktion als Einbauschubladen auszubilden, welche als Dampfgarschubladen bezeichnet werden können. Üblicherweise nehmen derartige Dampfgarschubladen in ihrem Garraum, welcher auf dem Auszugsboden angeordnet ist, wenigstens ein Gargefäß mit Gargut auf. Das Gargefäß ist üblicherweise entnehmbar, üblicherweise nach oben aus der geöffneten Einbauschublade heraus. Entsprechend ist die Zugangsöffnung zum Garraum bei Dampfgarschubladen horizontal und üblicherweise rechteckig ausgebildet und kann üblicherweise mit einem schwenkbaren Deckel verschlossen und geöffnet werden. Der schwenkbare Deckel ist üblicherweise an der hinteren Kante der Dampfgarschublade, welcher der Blende abgewandt ist, nach oben hin schwenkbar angeordnet.

In geschlossenen Einbauschubladen kann sich allgemein Kondenswasser an den Oberflächen des Innenraums inkl. der Innen- bzw. Unterseite des Verschlusselements in Form eines Deckels bilden. Dies kann umso stärker bzw. deutlicher auftreten, falls die Einbauschublade ein Einbauküchengerät aufweist bzw. darstellt, bei dessen Betrieb es zu einer Erzeugung von Wasserdampf kommen kann, da sich hierdurch die Menge an Feuchtigkeit in der Luft erhöht, welche an den Oberflächen kondensieren kann. Dies gilt insbesondere für ein Küchengerät mit Dampffunktion wie beispielsweise eine Dampfgarschublade.

In jedem Fall kann das Kondenswasser, welches sich an der Unterseite des Deckels der Einbauschublade bildet, an der Innen- bzw. Unterseite des Deckels zu einem Schwenkelement bzw. zu einem Scharnier bzw. Deckelscharnier hin herunterlaufen, wenn der Benutzer den Deckel hochklappt und somit der zuvor horizontal ausgerichtete Deckel teilweise bis vollständig in der vertikalen Richtung nach oben zeigt.

Das herunterlaufende Kondenswasser bzw. Kondensat kann somit seitlich am Deckel bzw. am Außengehäuse vorbei laufen und das Küchenmöbel erreichen, in dieses hineinfließen bzw. an dessen Möbelblende herunterfließen. Auch kann das Kondenswasser direkt von der Einbauschublade nach unten und insbesondere auf den Boden tropfen. Dies kann es erfordern, dass der Benutzer das ausgetretene Kondenswasser mit einem Lappen oder dergleichen aufsammeln und entfernen muss, um z.B. das Küchenmöbel vor Nässe zu schützen und bzw. oder die Rutschgefahr eines nassen Fußbodens zu vermeiden. In jedem Fall kann dies einen zusätzlichen Aufwand für den Benutzer darstellen. Auch kann das Kondenswasser in den Garraum gelangen und dort vom Benutzer zu entfernen sein.

Ist im Garraum eine Kondensatbehälter bzw. eine Kondensatschale als Auffangbehälter vorhanden, um das Kondensat von allen Oberflächen aufzunehmen, so dass die Kondensatmenge dessen Fassungsvermögen übersteigen, so dass das überschüssige Kondensat in den übrigen Innenraum bzw. Garraum gelangen und auch dort vom Benutzer zu entfernen sein kann. Auch kann das Kondensat an der Kondensatschale vorbei in den Innenraum gelangen, was ebenfalls ein händisches Entfernen dieses Kondensats durch den Benutzer erforderlich machen kann.

Dies kann insbesondere bei Küchengeräten auftreten, welche Dampf erzeugen bzw. verwenden wie beispielsweise Dampfgarer oder Dampfgar-Kombigeräte. Grundsätzlich kann Kondensat aber auch in anderen Küchengeräten auftreten. Dies gilt sowohl für freistehende als auch eingebaute Küchengeräte.

Der Erfindung stellt sich somit das Problem, ein Küchengerät, vorzugsweise ein Küchengerät mit Dampffunktion, besonders vorzugsweise eine Dampfgarschublade, der eingangs beschriebenen Art bereitzustellen, so dass an der Unterseite eines Deckels herunterlaufendes Kondenswasser besser als bisher bekannt aufgefangen werden kann. Dies soll insbesondere als Schublade bzw. als Einbauschublade erfolgen. In jedem Fall soll dies möglichst einfach, kostengünstig, bauraumsparend, langlebig und bzw. oder optisch unauffällig bzw. ansprechend erfolgen. Zumindest soll eine Alternative zu bekannten derartigen Küchengeräten geschaffen werden.

Erfindungsgemäß wird dieses Problem durch ein Küchengerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Küchengerät, vorzugsweise ein Küchengerät mit Dampffunktion, besonders vorzugsweise eine Dampfgarschublade, mit einem Innenraum, vorzugsweise einem Garraum, welcher ausgebildet ist, wenigstens ein Gargeschirr und bzw. oder wenigstens ein Lebensmittel durch eine Zugangsöffnung von oben aufzunehmen, und mit einem Deckel, welcher ausgebildet ist, durch Schwenken mittels eines Schwenkelements, vorzugsweise eines Scharniers, die Zugangsöffnung des Innenraums von oben zu verschließen und freizugeben. Dies kann insbesondere als Einbauküchengerät und bzw. oder als Schublade bzw. als Einbauschublade realisiert werden.

Das Küchengerät ist gekennzeichnet durch wenigstens ein Abtropfelement, welches ausgebildet und angeordnet ist, an der Unterseite des hochgeschwenkten Deckels herunterlaufende Flüssigkeit, insbesondere Kondenswasser, aufzufangen und in den Innenraum, vorzugweise in einen Abfluss, zu leiten, wobei das Abtropfelement zumindest abschnittsweise, vorzugsweise vollflächig, eine Führungsfläche als Gefälle aufweist, welche ausgebildet ist, aufgefangene Flüssigkeit, vorzugsweise mittig, in den Innenraum, vorzugweise in einen Abfluss, zu leiten.

Somit kann erfindungsgemäß die Führung bzw. die Ableitung derartiger Flüssigkeiten durch das Abtropfelement verbessert werden, indem das Abtropfelement dem Auffangen und Leiten der Flüssigkeit dient. Das Abtropfelement kann hierzu insbesondere einstückig und aus Silikon ausgebildet sein.

Ferner kann das Gefälle der Führungsfläche, insbesondere zum Abfluss bzw. zum Auslass hin, die Führung der Flüssigkeit dorthin verbessern.

Gemäß einem Aspekt der Erfindung weist die Führungsfläche des Abtropfelements zumindest abschnittsweise, vorzugsweise vollflächig, wenigstens eine Kondensatführung, vorzugsweise wenigstens ein Leitelement als Vertiefung und bzw. oder als Erhebung, auf, welche ausgebildet ist, aufgefangene Flüssigkeit, vorzugsweise mittig, in den Innenraum, vorzugweise in einen Abfluss, zu leiten. Dies kann eine Möglichkeit darstellen, für Führung der Flüssigkeit weiter zu verbessern.

Gemäß einem weiteren Aspekt der Erfindung weist das Abtropfelement zumindest abschnittsweise, vorzugweise im Wesentlichen, randseitig gegenüber dem Innenraum wenigstens eine Kondensatführung, vorzugsweise wenigstens eine seitliche Kante, auf, welche ausgebildet ist, aufgefangene Flüssigkeit, vorzugsweise mittig, in den Innenraum, vorzugweise in einen Abfluss, zu leiten. Dies kann eine Möglichkeit darstellen, für Führung der Flüssigkeit weiter zu verbessern.

Gemäß einem weiteren Aspekt der Erfindung weist das Abtropfelement, vorzugsweise eine Führungsfläche des Abtropfelements, vorzugsweise mittig, wenigstens einen, vorzugsweise dreieckigen oder geschwungenen, Auslass auf, welcher ausgebildet ist, aufgefangene Flüssigkeit in den Innenraum, vorzugweise in einen Abfluss, zu leiten. Dies kann eine Möglichkeit darstellen, für Führung der Flüssigkeit weiter zu verbessern. Aufgrund der dreieckigen oder geschwungenen Form kann in der Mitte der größte Materialanteil vorhanden sein, so dass das Eigengewicht die Abtropflippe bzw. Auffanglippe, insbesondere am Auslass, nach unten neigen kann, was die Führung der Flüssigkeit weiter verbessern kann.

Gemäß einem weiteren Aspekt der Erfindung weist das Schwenkelement zumindest abschnittsweise, vorzugweise im Wesentlichen, randseitig seitlich wenigstens eine Kondensatführung, vorzugsweise wenigstens eine seitliche Kante, auf, welche ausgebildet ist, aufgefangene Flüssigkeit zum Abtropfelement hin zu leiten. Dies kann eine Möglichkeit darstellen, für Führung der Flüssigkeit weiter zu verbessern.

Gemäß einem weiteren Aspekt der Erfindung weist das Schwenkelement zumindest abschnittsweise, vorzugsweise vollflächig, wenigstens eine Kondensatführung, vorzugsweise wenigstens ein Leitelement als Vertiefung und bzw. oder als Erhebung, auf, welche ausgebildet ist, aufgefangene Flüssigkeit, vorzugsweise mittig, zum Abtropfelement hin zu leiten. Dies kann eine Möglichkeit darstellen, für Führung der Flüssigkeit weiter zu verbessern.

Gemäß einem weiteren Aspekt der Erfindung ist das Abtropfelement zumindest abschnittweise zum Schwenkelement hin, vorzugsweise vollflächig, aus einem vergleichsweise flexiblen Material, vorzugweise Silikon, ausgebildet. Dies kann eine Neigung bzw. Biegung der Führungsfläche nach unten zur Ausbildung des Gefälles unterstützen, indem das Material ausreichend flexibel ist, um durch sein Eigengewicht und bzw. oder durch das Gewicht der aufgefangenen Flüssigkeit nach unten gebogen zu werden.

Gemäß einem weiteren Aspekt der Erfindung ist das Abtropfelement mittels einer Schwenkelementanbindung derart mit dem Schwenkelement verbunden, so dass das Abtropfelement entsprechend der Schwenkbewegung des Deckels um das Schwenkelement geführt, vorzugsweise gewickelt, werden kann. Dies kann eine konkrete Möglichkeit der Umsetzung darstellen. Insbesondere kann dies eine Bewegung des Abtropfelements wie zuvor beschrieben ermöglichen, ohne eine zusätzlichen Antrieb zu verwenden. Auch kann die Bewegung des Abtropfelements synchron mit der Bewegung des Deckels auf diese Art und Weise mechanisch sichergestellt bzw. umgesetzt werden.

Gemäß einem weiteren Aspekt der Erfindung ist die Schwenkelementanbindung des Abtropfelements mit demjenigen Teil des Schwenkelements mitbeweglich verbunden, welcher mit dem Deckel mitbeweglich verbunden ist. Dies kann eine konkrete Möglichkeit der Umsetzung darstellen.

Gemäß einem weiteren Aspekt der Erfindung ist das Küchengerät als Schublade ausgebildet. Dies kann die Umsetzung und Nutzung der zuvor beschriebenen Eigenschaften und Vorteile insbesondere bei derartigen Küchengeräten ermöglich.

Mit anderen Worten ist es bekannt, den Innenraum eines Einbauküchengeräts und insbesondere den Garraum eines Küchengeräts mit Dampffunktion wie beispielsweise einer Dampfgarschublade mit einem Deckel zu verschließen. Beispielweise während eines Dampfgarprozesses kann sich kondensierendes Wasser an der Unterseite des Deckels bilden. Das kondensierte Wasser bzw. das Kondensat fließt bei dem Öffnen des Deckels nach unten und ggfs. über ein Scharnier des Deckels in den Garraum ab.

Dabei kann bisher das kondensierte Wasser nicht gezielt in eine ggfs. im Garraum platzierte Kondensatschale geführt und durch diese aufgefangen werden. Dies kann dazu führen, dass die Kondensatmenge im Garraum deutlich, beispielsweise um das 2,5fach, größer als die zugelassene Restwassermenge im Garraum von beispielsweise 50mL sein kann. Dies kann dazu führen, dass der Benutzer die Kondensatschale entnehmen und ausleeren und zusätzlich mehrfach den Garraum beispielsweise mit einem Schwammtuch auswischen muss, um das Kondenswasser bzw. das Restwasser aus dem Garraum zu entfernen.

Es kann auch eine Abtropflippe bzw. eine Auffanglippe auf der Unterseite am Deckel über dem Scharnier angebracht werden, um das Kondenswasser gezielt zur Kondensatschale zu leiten. Derartige Abtropflippen sind üblicherweise als gerade, gleichmäßige Wasser-Auffangrinne, vergleichbar einer Dachrinne, aus festem Material unter der Backofentür, unter der Mikrowellentür, unter dem Deckel etc. für die Aufnahme einzelner Tropfen vorgesehen.

Dabei kann es vorkommen, dass die summierte Wassermenge nicht groß genug ist, um ein Wasserablauf sicherzustellen, da es zur Bildung einzelner Tropfen kommt, die nicht abfließen. Auch kann sich die Wassermenge über die ganze Breite der Abtropflippe bzw. Auffanglippe verteilen und nicht abfließen, d.h. es kann zu einer Wasserfilmbildung kommen, die durch zu große Reibung nicht abfließt.

Nachteilig ist somit, dass mit einer Wasser-Auffangrinne, beispielsweise wie eine Dachrinne, an Kücheneinbaugeräten nur geringe Wassermengen aufgefangen und gesammelt werden können, da das Aufnahmevolumen begrenzt ist. Größere Wassermengen wie z.B. an dem Deckel einer Dampfgarschublade mit ca. 75mL können nicht ohne überschwappen aufgenommen werden. Eine Ableitung in ein Auffanggefäß ist aufgrund der Dachrinne-Kontur und eines fehlenden Gefälles nicht möglich. Zudem gibt es keinen Behälter, um das ganze Kondenswasser aufzufangen.

Erfindungsgemäß können daher die Reibungsverluste minimiert und das Kondenswasser in Flussrichtung durch die Leitkontur aufsummiert werden. Dadurch kann eine größere Wassermenge durchgehend abfließen und in der Kondensatschale aufgefangen werden.

Der Aufbau kann derart umgesetzt werden, dass die Abtropflippe mit der Auffanglippe kombiniert wird. Die Abtropflippe bzw. Auffanglippe kann sich vom Rand zur Mitte hin, beispielsweise als Dreieck oder als geschwungene Form, verlängern, so dass in der Mitte der größte Materialanteil sein kann. Das Eigengewicht kann die Abtropflippe bzw. die Auffanglippe am Auslass nach unten neigen.

Die Abtropflippe bzw. die Auffanglippe kann eine vom Scharnier zum Auslass, d.h. von hinten nach mittig vorne, in eine vom Rand zur Mitte hinlaufende Leitkontur aufweisen.

Die Abtropflippe bzw. die Auffanglippe kann einen aufgestellten Rand als Schwapp-Schutz und Leitkontur zum Garraum aufweisen.

Die Abtropflippe bzw. die Auffanglippe kann das vom Deckel ablaufende Kondenswasser durch ein Gefälle vom Deckelscharnier zum Garraum und zusätzlich von den Rändern in die Mitte hin durch die Leitkontur aufsummieren und gezielt über den Auslass in die Kondensatschale leiten. Hierbei kann die Leitkontur an dem Scharnier unterstützen, die das vom Deckel ablaufende Kondenswasser vom Rand weg zur Mitte führt.

Vorteilhaft ist, dass mit einer Anbindung am Gehäuse durch ein weiches Material wie z.B. Silikon sich die Abtropflippe bzw. die Auffanglippe, ggf. auch in Kombination mit einem festen Material, durch das Eigengewicht vom Deckelscharnier leicht in die Flussrichtung nach vorne herunter biegen kann.

Vorteilhaft ist auch, dass mit einer Abtropflippe bzw. Auffanglippe in der Ausführungsform nur aus weichem Material wie z.B. Silikon sich die Abtropflippe bzw. Auffanglippe durch das Eigengewicht vom Deckelscharnier leicht in die Flussrichtung nach vorne herunter und zusätzlich vom Rand in die Flussrichtung leicht zur Mitte herunter biegen kann. Dies kann dazu führen, dass das aufgefangene Kondenswasser durch die Leitkontur sich selbständig in Richtung Auslass aufsummiert, abfließt und nicht in der Abtropflippe bzw. Auffanglippe stehen bleibt oder überschwappt.

Das Gewicht des Kondenswassers kann die Abtropflippe/Auffanglippe weiter nach unten biegen, so dass sich der Effekt "abfließendes Wasser" sich von selbst verstärken kann.

Der aufgestellte Rand als Schwapp-Schutz kann die Aufsummierung vom Rand zur Mitte hin unterstützen.

Mehrere Ausführungsbeispiele der Erfindung sind in den Zeichnungen rein schematisch dargestellt und werden nachfolgend näher beschrieben. Es zeigt
- Figur 1: eine perspektivische Darstellung eines Küchenmöbels mit einem erfindungsgemäßen Küchengerät gemäß eines ersten Ausführungsbeispiels als Dampfgarschublade im eingeschobenen Zustand;
- Figur 2: die Darstellung der Figur 1 im ausgezogenen Zustand des Küchengeräts;
- Figur 3: ein Abtropfelement des erfindungsgemäßen Küchengeräts gemäß des ersten Ausführungsbeispiels direkt von oben;
- Figur 4: die Darstellung der Figur 3 mit den Fließrichtungen eines Kondensats;
- Figur 5: ein Abtropfelement des erfindungsgemäßen Küchengeräts gemäß eines zweiten Ausführungsbeispiels direkt von oben;
- Figur 6: die Darstellung der Figur 5 mit den Fließrichtungen eines Kondensats;
- Figur 7: eine perspektivische Detaildarstellung eines Abschnitts einer Führungsfläche bzw. eines Gefälle des Abtropfelements des erfindungsgemäßen Küchengeräts gemäß des ersten Ausführungsbeispiels der Figur 3;
- Figur 8: eine perspektivische Detaildarstellung eines Abschnitts einer Führungsfläche bzw. eines Gefälle des Abtropfelements eines erfindungsgemäßen Küchengeräts gemäß eines dritten Ausführungsbeispiels;
- Figur 9: eine perspektivische Detaildarstellung eines Abschnitts einer Führungsfläche bzw. eines Gefälle des Abtropfelements eines erfindungsgemäßen Küchengeräts gemäß eines vierten Ausführungsbeispiels;
- Figur 10: eine perspektivische Detaildarstellung eines Abschnitts einer Führungsfläche bzw. eines Gefälle des Abtropfelements eines erfindungsgemäßen Küchengeräts gemäß eines fünften Ausführungsbeispiels;
- Figur 11: eine perspektivische Detaildarstellung eines Abschnitts eines Schwenkelements des erfindungsgemäßen Küchengeräts gemäß des ersten Ausführungsbeispiels der Figur 3; und
- Figur 12: eine perspektivische Detaildarstellung eines Abschnitts eines Schwenkelements eines erfindungsgemäßen Küchengeräts gemäß eines sechsten Ausführungsbeispiels.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

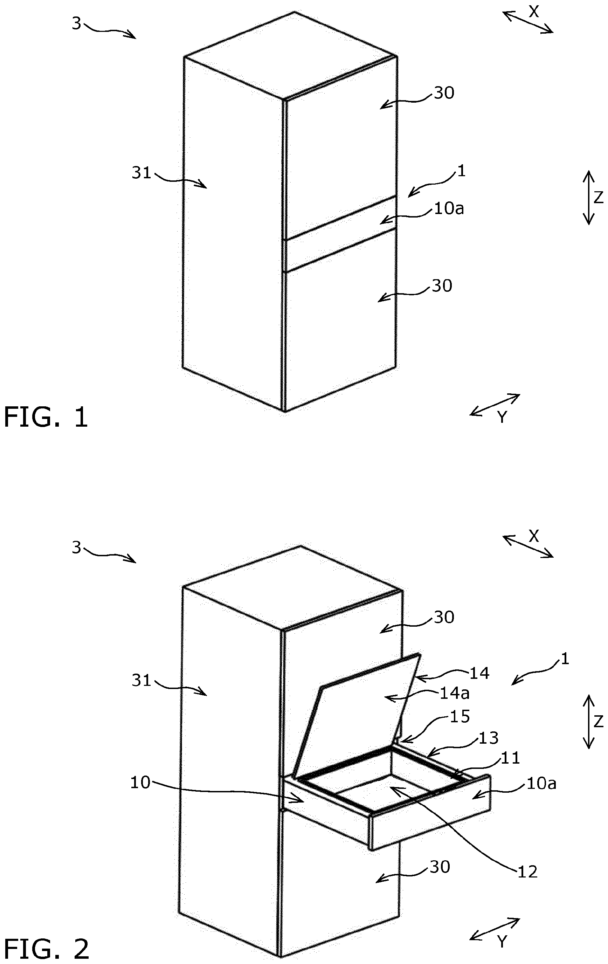

Figur 1 zeigt eine perspektivische Darstellung eines Küchenmöbels 3 mit einem erfindungsgemäßen Küchengerät 1 gemäß eines ersten Ausführungsbeispiels im eingeschobenen Zustand. Figur 2 zeigt die Darstellung der Figur 1 im ausgezogenen Zustand des Küchengeräts 1.

Das Küchenmöbel 3, welches auch als Küchenzeile 3 bezeichnet, werden kann, weist ein Möbelfront 30 bzw. mehrere Möbelblenden 30 auf, mit welcher bzw. mit welchen das Küchenmöbel 1 einem Benutzer zugewandt in der Längsrichtung X nach vorne hin abschließt. Die Möbelfront 30 wird von mehreren Türen, Klappen und dergleichen (nicht bezeichnet), ggfs. auch Schubladen (nicht dargestellt) gebildet, welche schwenkbar, klappbar bzw. ziehbar an einem Rahmen 31, Gestell 31 bzw. Korpus 31 des Küchenmöbels 3 angeordnet sind.

Entlang der vertikalen Richtung Z etwa mittig ist zwischen zwei Möbelfronten 30 ein erfindungsgemäße Küchengerät 1 in Form einer Dampfgarschublade 1 als Küchengerät 1 mit Dampffunktion angeordnet. Die Dampfgarschublade 1 weist ein Außengehäuse 10 auf, welches auch als äußeres Gehäuse 10 bezeichnet werden kann und die Dampfgarschublade 1 im Wesentlichen nach außen abschließt bzw. umschließt. Das Außengehäuse 10 schließt entlang der Längsrichtung X nach Vorne, d.h. zum Benutzer hin, mit einer Blende 10a, welche im eingeschobenen Zustand der Dampfgarschublade 1 flächig bündig mit den Möbelfronten 30 des Küchenmöbels 3 abschließt, siehe Figur 1. Seitlich in der Querrichtung Y ist ein Paar von Teleskopschienen (nicht dargestellt) an dem Außengehäuse 10 angeordnet, so dass die Dampfgarschublade 1 gegenüber dem Rahmen 30 des Küchenmöbels 3 in der Längsrichtung X ausgezogen und eingeschoben werden kann.

Innerhalb des Außengehäuses 10 ist ein Innengehäuse 11 angeordnet, welches auch als inneres Gehäuse 11 bezeichnet werden kann. Das Innengehäuse 11 schließt in der Längsrichtung X nach hinten sowie nach vorne bis zur Blende 10a, in der vertikalen Richtung Z nach unten sowie in der Querrichtung Y zu beiden Seiten mit dem Außengehäuse 10 ab, sodass zwischen dem Außengehäuse 10 und im Innengehäuse 11 ein Zwischenraum (nicht dargestellt) gebildet wird, welcher auch als Gehäuseraum bezeichnet werden kann. Dieser Zwischenraum stellt das Innere der Dampfgarschublade 1 dar.

Von dem Innengehäuse 11 wird ferner im Wesentlichen ein Innenraum 12 umschlossen, in welchem ein Garprozess bzw. ein Dampfgarprozess durchgeführt werden kann. Hierzu ist im Gehäuseraum bzw. im Zwischenraum der Dampfgarschublade 1 ein Dampferzeuger (nicht dargestellt) angeordnet, welcher Wasser verdampfen und den Wasserdampf in den Innenraum 12 fördern kann. Entsprechend kann der Innenraum 12 auch als Garraum 12 bezeichnet werden.

Der Innenraum 12 ist in der vertikalen Richtung Z für den Benutzer von oben durch eine Zugangsöffnung 13 hindurch zugänglich. Die Zugangsöffnung 13 kann mittels eines Verschlusselements 14 in Form eines Deckels 13 geschlossen und geöffnet werden. Der Deckel 14 ist hierzu mittels wenigstens eines Schwenkelements 14a in Form eines Scharniers 14a in der vertikalen Richtung Z nach oben hin schwenkbar mit dem Außengehäuse 10 der Dampfgarschublade 1 verbunden, so dass der Deckel 14 vom Benutzer von sich weg bzw. zur darüber befindlichen Möbelblende 30 hin hochgeschwenkt werden kann, um im ausgezogenen Zustand der Dampfgarschublade 1 auf den Garraum 12 zugreifen zu können, siehe Figur 2. Wird der Deckel 14 in die Horizontalen X, Y heruntergeschwenkt, wird der Garraum 12 verschlossen und die Dampfgarschublade 1 kann in das Küchenmöbel 3 eingeschoben werden, siehe Figur 1.

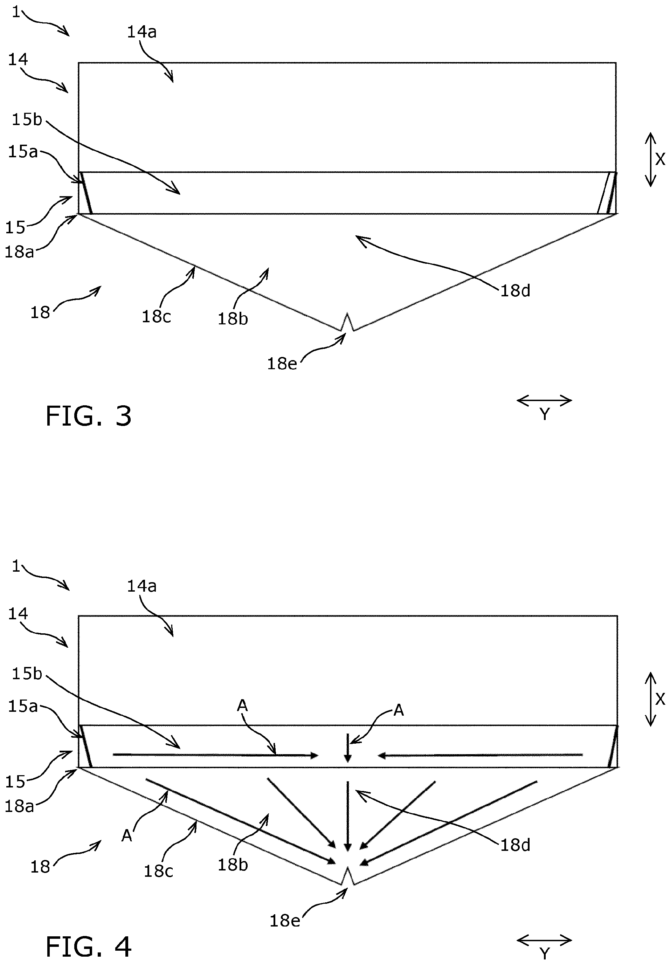

Figur 3 zeigt ein Abtropfelement 18 des erfindungsgemäßen Küchengeräts 1 gemäß des ersten Ausführungsbeispiels direkt von oben. Figur 4 zeigt die Darstellung der Figur 3 mit den Fließrichtungen A eines Kondensats. Das Abtropfelement 18 kann auch als Abtropflippe 18 oder als Auffanglippe 18 bezeichnet werden kann. Das Abtropfelement 18 ist als flaches Dreieck ausgebildet und erstreckt sich im Wesentlichen in der Querrichtung Y und dort über die gesamte Breite der Zugangsöffnung 13.

In der Querrichtung Y mittig ist eine Spitze als Auslass 18e ausgebildet. Die flächige Erstreckung des Abtropfelements 18 in Form einer Führungsfläche 18b als Gefälle 18b zeigt zu dem Auslass 13 hin. Hierdurch kann der Auslass 18e des Abtropfelements 18 über einen Abfluss 17 gebracht werden, welcher in der Querrichtung Y zwischen zwei entnehmbaren Gargeschirren 16 bzw. Garbehältern 16 angeordnet ist und zu einem Kondensatbehälter, zu einer Kondensatschale bzw. zu einem Auffangbehälter (nicht dargestellt) hinführt, um dort Kondantsat aufzunehmen. Der Kondensatbehälter ist entnehmbar unterhalb der Gargeschirre 16 angeordnet.

Das Abtropfelement 18 ist mittels einer Schwenkelementanbindung 18a derart mit dem Schwenkelement 15 verbunden, so dass das Abtropfelement 18 entsprechend der Schwenkbewegung des Deckels 14 um das Schwenkelement 15 gewickelt wird. Hierzu ist die Schwenkelementanbindung 18a des Abtropfelements 18 mit demjenigen Teil des Schwenkelements 15 mitbeweglich verbunden, welcher mit dem Deckel 14 mitbeweglich verbunden ist.

Ist der Deckel 14 hochgeklappt, so kann das Abtropfelement 18 an der Unterseite 14a des hochgeschwenkten Deckels 14 herunterlaufende Flüssigkeit, insbesondere Kondenswasser, auffangen und in den Innenraum 12 bzw. zu dessen Abfluss 17 hin leiten. Aufgrund der beim Hochschwenken des Deckels 14 erfolgen Bewegung des Abtropfelements 18 ragt dessen Auslass 18e ausreichend weit in die Zugangsöffnung 13 bzw. über den Abfluss 17 des Kondensatbehälters, dass der Abfluss 17 des Kondensatbehälters vom abfließenden Kondensat sicher erreicht werden kann.

Aufgrund der Bewegung des Abtropfelements 18 gibt das Abtropfelement 18 bei geschlossenem Deckel 14 den Innenraum 12 wieder vollständig frei, so dass eine Dampfgarfunktion bzw. dessen Dampfverteilung nicht gestört werden.

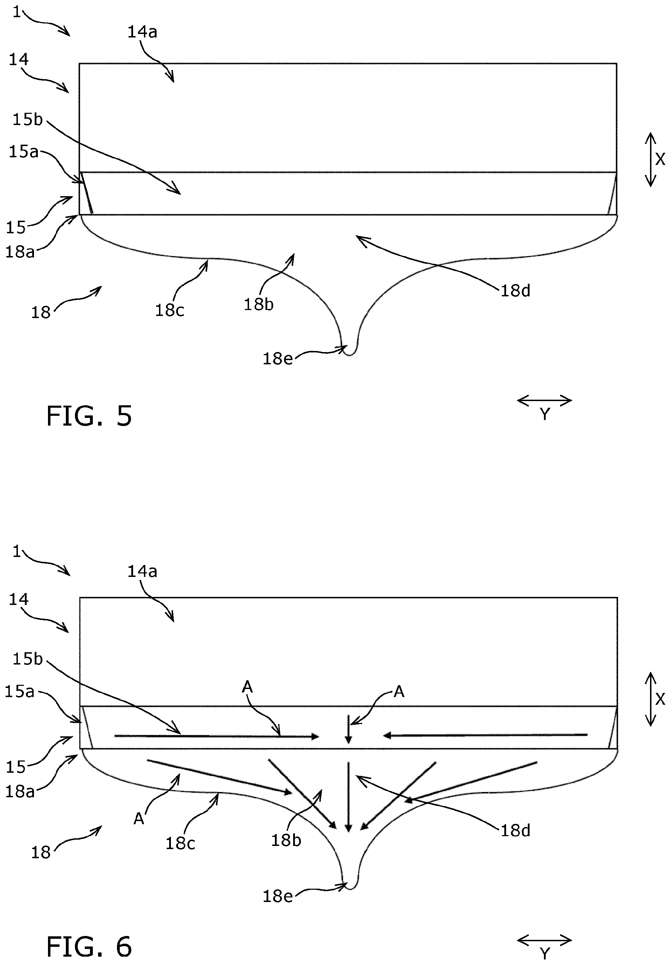

Figur 5 zeigt ein Abtropfelement 18 des erfindungsgemäßen Küchengeräts 1 gemäß eines zweiten Ausführungsbeispiels direkt von oben. Figur 6 zeigt die Darstellung der Figur 5 mit den Fließrichtungen A eines Kondensats. In diesem Fall ist die Führungsfläche 18b des Abtropfelements 18 geschwungen ausgebildet.

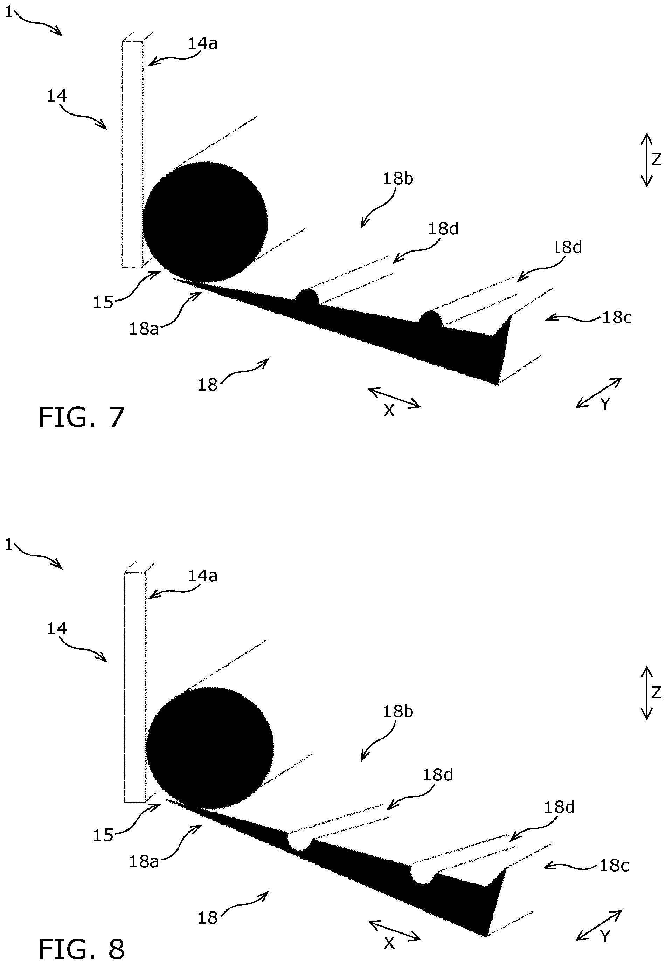

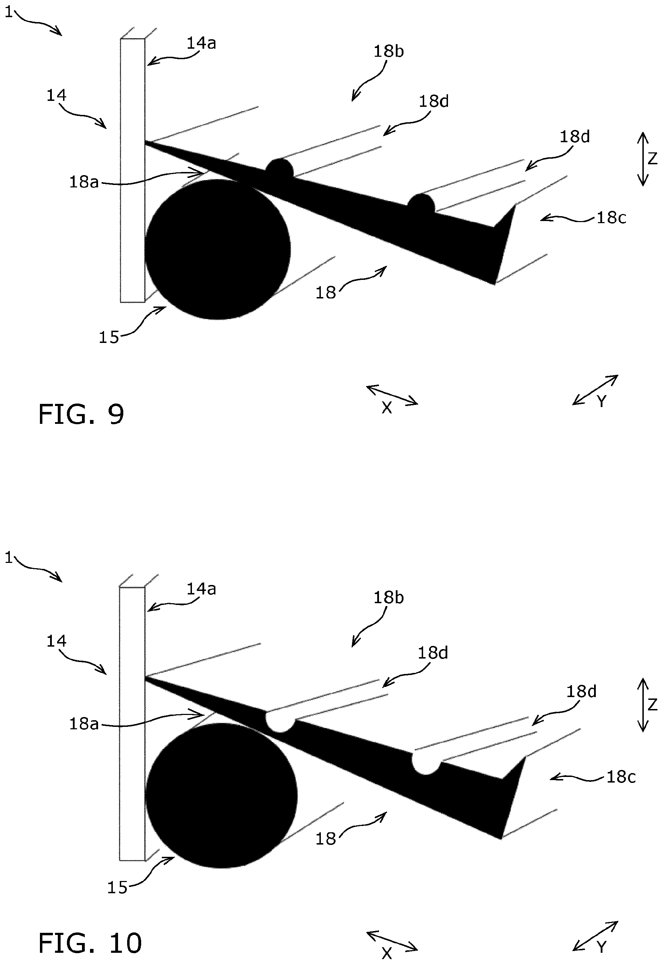

In jedem Fall weist das Abtropfelement 18 zur Verbesserung der Führung des Kondensats von der Unterseite 14a des hochgeklappten Deckels 14 zum Auslass 18e des Abtropfelements 18 hin randseitig gegenüber dem Innenraum 12 beidseitig des Auslasses 18e entlang der Querrichtung Y jeweils eine durchgängige Kondensatführung 18c in Form einer seitlichen Kante 18c auf. Ferner weist das Abtropfelement 18 zu diesem Zweck vollflächig die bereits erwähnte Führungsfläche 18b als Gefälle 18b, auf. Auch weist die Führungsfläche 18b des Abtropfelements 18 zu diesem Zweck vollflächig mehrere Kondensatführungen 18d in Form von Leitelementen 18d als Vertiefungen, siehe Figuren 7 und 9, und bzw. oder als Erhebungen, siehe Figuren 8 und 10, auf.

Dabei kann die Anbindung des Abtropfelements 18 mittels dessen Schwenkelementanbindung 18a unterhalb des Schwenkelements 15 erfolgen, siehe Figuren 7 und 8, wie zuvor beschrieben, was das Aufwickeln ermöglichen kann. Alternativ kann die Anbindung des Abtropfelements 18 mittels dessen Schwenkelementanbindung 18a aber auch oberhalb des Schenkelements 15 erfolgen, siehe Figuren 9 und 10, wodurch zwar kein Aufwickeln um das Schwenkelement 15 herum erfolgen kann, jedoch das Schwenkelement 15 von oben umschlossen und vor dem Kondensat geschützt werden kann.

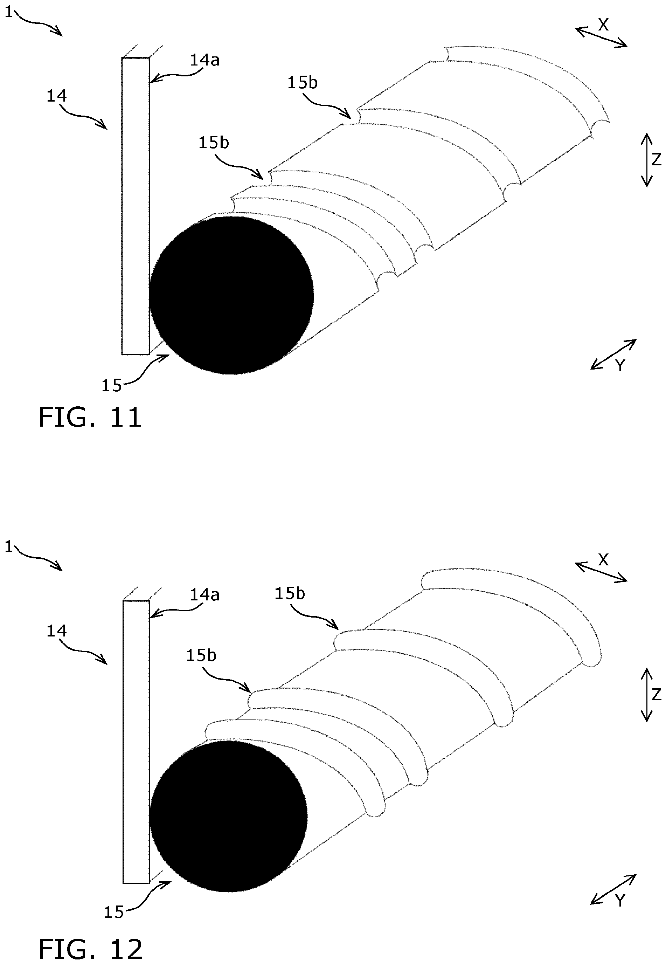

Aus diesem Grund sind auch am Schwenkelement 15 oben drauf zum einen in der Querrichtung Y randseitig Kondensatführungen 15a bzw. seitliche Kanten 15a vorgesehen, um das Kondensat auf dem Schwenkelement 15 zu halten. Zum anderen sind entlang des Schwenkelements 15 Kondensatführungen 15b bzw. Leitelemente 15b vorgesehen, um das Kondensat weiter zur Mitte hin zu führen. Die Leitelemente 15b des Schwenkelements 15 können als Vertiefungen, siehe Figur 11, und bzw. oder als Erhebungen 15b, siehe Figur 12, ausgebildet sein.

### Bezugszeichenliste (Bestandteil der Beschreibung)

- A: Fließrichtung des Kondensats
- X: Längsrichtung; Tiefe; Länge
- Y: Querrichtung; Breite
- Z: vertikale Richtung; Höhe
- X, Y: Horizontale; horizontale Ebene

- 1: Küchengerät; Küchengerät mit Dampffunktion; Dampfgarschublade
- 10: Außengehäuse; äußeres Gehäuse
- 10a: Blende
- 11: Innengehäuse; inneres Gehäuse
- 12: Innenraum; Garraum
- 13: Zugangsöffnung
- 14: Verschlusselement; Deckel
- 14a: Unterseite bzw. Innenseite des Verschlusselements 14
- 15: Schwenkelement; Scharnier; Deckelscharnier
- 15a: Kondensatführungen bzw. seitliche Kanten des Schwenkelements 15
- 15b: Kondensatführungen bzw. Leitelemente des Schwenkelements 15 als
- 16: Gargeschirre; Garbehälter
- 17: Abfluss zu Kondensatbehälter, Kondensatschale bzw. Auffangbehälter
- 18: Abtropfelement; Abtropflippe; Auffanglippe
- 18a: Schwenkelementanbindung des Abtropfelements 18
- 18b: Führungsfläche bzw. Gefälle des Abtropfelements 18
- 18c: Kondensatführungen bzw. seitliche Kanten des Abtropfelements 18
- 18d: Kondensatführungen bzw. Leitelemente des Abtropfelements 18
- 18e: Auslass des Abtropfelements 18

- 3: Küchenmöbel; Küchenzeile
- 30: Möbelfront; Möbelblende
- 31: Rahmen; Gestell; Korpus

## Patentansprüche

1. Küchengerät (1), vorzugsweise Küchengerät (1) mit Dampffunktion, besonders vorzugsweise Dampfgarschublade (1),
mit einem Innenraum (12), vorzugsweise einem Garraum (12), welcher ausgebildet ist, wenigstens ein Gargeschirr und/oder wenigstens ein Lebensmittel durch eine Zugangsöffnung (13) von oben aufzunehmen, und
mit einem Deckel (14), welcher ausgebildet ist, durch Schwenken mittels eines Schwenkelements (15), vorzugsweise eines Scharniers (15), die Zugangsöffnung (13) des Innenraums (12) von oben zu verschließen und freizugeben,
**gekennzeichnet durch**
wenigstens ein Abtropfelement (18), welches ausgebildet und angeordnet ist, an der Unterseite (14a) des hochgeschwenkten Deckels (14) herunterlaufende Flüssigkeit, insbesondere Kondenswasser, aufzufangen und in den Innenraum (12), vorzugweise in einen Abfluss (17), zu leiten,
wobei das Abtropfelement (18) zumindest abschnittsweise, vorzugsweise vollflächig, eine Führungsfläche (18b) als Gefälle (18b) aufweist, welche ausgebildet ist, aufgefangene Flüssigkeit, vorzugsweise mittig, in den Innenraum (12), vorzugweise in einen Abfluss (17), zu leiten.

2. Küchengerät (1) nach Anspruch 1,
wobei die Führungsfläche (18b) des Abtropfelements (18) zumindest abschnittsweise, vorzugsweise vollflächig, wenigstens eine Kondensatführung (18d), vorzugsweise wenigstens ein Leitelement (18d) als Vertiefung und/oder als Erhebung, aufweist, welche ausgebildet ist, aufgefangene Flüssigkeit, vorzugsweise mittig, in den Innenraum (12), vorzugweise in einen Abfluss (17), zu leiten.

3. Küchengerät (1) nach Anspruch 1 oder 2,
wobei das Abtropfelement (18) zumindest abschnittsweise, vorzugweise im Wesentlichen, randseitig gegenüber dem Innenraum (12) wenigstens eine Kondensatführung (18c), vorzugsweise wenigstens eine seitliche Kante (18c), aufweist, welche ausgebildet ist, aufgefangene Flüssigkeit, vorzugsweise mittig, in den Innenraum (12), vorzugweise in einen Abfluss (17), zu leiten.

4. Küchengerät (1) nach einem der vorangehenden Ansprüche,
wobei das Abtropfelement (18), vorzugsweise eine Führungsfläche (18b) des Abtropfelements (18), vorzugsweise mittig, wenigstens einen, vorzugsweise dreieckigen oder geschwungenen, Auslass (18e) aufweist, welcher ausgebildet ist, aufgefangene Flüssigkeit in den Innenraum (12), vorzugweise in einen Abfluss (17), zu leiten.

5. Küchengerät (1) nach einem der vorangehenden Ansprüche,
wobei das Schwenkelement (15) zumindest abschnittsweise, vorzugweise im Wesentlichen, randseitig seitlich wenigstens eine Kondensatführung (15a), vorzugsweise wenigstens eine seitliche Kante (15a), aufweist, welche ausgebildet ist, aufgefangene Flüssigkeit zum Abtropfelement (18) hin zu leiten.

6. Küchengerät (1) nach einem der vorangehenden Ansprüche,
wobei das Schwenkelement (15) zumindest abschnittsweise, vorzugsweise vollflächig, wenigstens eine Kondensatführung (15b), vorzugsweise wenigstens ein Leitelement (15b) als Vertiefung und/oder als Erhebung, aufweist, welche ausgebildet ist, aufgefangene Flüssigkeit, vorzugsweise mittig, zum Abtropfelement (18) hin zu leiten.

7. Küchengerät (1) nach einem der vorangehenden Ansprüche,
wobei das Abtropfelement (18) zumindest abschnittweise zum Schwenkelement (15) hin, vorzugsweise vollflächig, aus einem vergleichsweise flexiblen Material, vorzugweise Silikon, ausgebildet ist.

8. Küchengerät (1) nach einem der vorangehenden Ansprüche,
wobei das Abtropfelement (18) mittels einer Schwenkelementanbindung (18a) derart mit dem Schwenkelement (15) verbunden ist, so dass das Abtropfelement (18) entsprechend der Schwenkbewegung des Deckels (14) um das Schwenkelement (15) geführt, vorzugsweise gewickelt, werden kann.

9. Küchengerät (1) nach Anspruch 8,
wobei die Schwenkelementanbindung (18a) des Abtropfelements (18) mit demjenigen Teil des Schwenkelements (15) mitbeweglich verbunden ist, welcher mit dem Deckel (14) mitbeweglich verbunden ist.

10. Küchengerät (1) nach einem der vorangehenden Ansprüche,
wobei das Küchengerät (1) als Schublade ausgebildet ist.
